# EUROPÄISCHE PATENTSCHRIFT

(11) **EP 1 980 359 B1**
(45) Veröffentlichungstag und Bekanntmachung des Hinweises auf die Patenterteilung: **27.06.2012**
(21) Anmeldenummer: 08004897.8
(22) Anmeldetag: 15.03.2008
(51) Int. Cl.: B23Q 1/58, B23Q 5/40, F16C 29/02, F16H 25/20

(54) **Verstelleinheit**
Adjustment unit
Unité de réglage

(30) Priorität: 14.04.2007 DE 102007017997
(43) Veröffentlichungstag der Anmeldung: 15.10.2008
(73) Patentinhaber: MiniTec Maschinenbau GmbH & Co. KG, 66914 Waldmohr (DE)
(72) Erfinder: Risch, Karl Heinz, 57410 GrosRederching (FR)
(74) Vertreter: Klein, Friedrich

(56) Entgegenhaltungen:
- DE-A1- 10 115 943
- JP-A- 1 193 138
- US-A- 3 822 958
- US-A- 5 761 960
- US-B1- 6 364 818

## Beschreibung

Die DE 37 34 922 A1 zeigt eine Verstelleinheit mit einem im Wesentlichen U-förmigen, als Gleitschale bezeichneten Schlitten, der ein quadratisches Rohr teilweise umgreift. Der Schlitten ist mittels zweier Führungsleisten, die in entsprechende Nuten an der Außenseite des Rohres eingreifen, verdrehsicher geführt. Am Schlitten ist mittels eines Steges ein Mutterteil angeformt. Steg und Mutterteil sind in entsprechend ausgebildeten Längsnuten des Rohres aufgenommen, wobei zwischen dem Steg und dem Mutterteil einerseits und den zugeordneten Längsnuten andererseits jeweils ein Abstand besteht. Das Mutterteil umschließt mit einem Innengewinde eine Gewindespindel, die in Längsrichtung des Rohres verläuft. In den Figuren 2 und 3 der DE-A1 sind zwei verschiedene Konstruktionsvarianten dargestellt, mit deren Hilfe der Schlitten sicher auf dem Rohr gehalten wird. Im einen Fall wird hierfür ein U-förmiges Klammerteil verwendet, das mit einem auf dem Schlitten befestigten U-förmigen Auflageflansch verschraubt ist und in Verbindung mit einer in ihm befindlichen Gleitstütze gemeinsam mit dem Auflageflansch und dem Schlitten das Rohr umgreift. Im anderen Fall werden die Führungsleisten des Schlittens mit Hilfe von Schrauben, die in dem Auflageflansch aufgenommen sind, in die Nuten des Rohres hinein gedrückt. Die bekannte Verstelleinheit ist durch die Verwendung der eine Halterung und Verdrehsicherheit des Schlittens bewirkenden Vorrichtungsteile verhältnismäßig aufwendig. Da diese Vorrichtungsteile an ein bestimmtes Rohr angepasst sind, kann die bekannte Verstelleinheit daher auch nur bei stets einheitlich ausgebildeten Rohren verwendet werden, d.h. für anders geformte Rohre oder Rohre anderer Abmessungen müssen entsprechend angepasste Verstelleinheiten vorgesehen werden.

Die US 5 761 960 A offenbart in dem in den Figuren 1 bis 5 dargestellten ersten Ausführungsbeispiel eine Verstelleinheit, die im Wesentlichen ebenfalls aus einem stabförmigen Hohlkörper, einer in einem Hohlraum des Hohlkörpers gelagerten Vorschubspindel und einem Schlitten besteht, der über ein stegförmiges Verbindungselement und einen die Vorschubspindel umgreifenden Ansatz mit der Vorschubspindel in Antriebsverbindung steht. Das stegförmige Verbindungselement durchgreift einen vom Hohlraum bis zur Oberseite des Hohlkörpers hindurchgehenden Längsschlitz. Bei dieser Verstelleinheit soll die Notwendigkeit der Justierung und Wartung von Kupplungsmitteln zwischen einem Antriebsmotor und der Vorschubspindel verringert und eine Verbesserung der dynamischen und statischen Charakteristik erzielt werden. Dies soll dadurch erreicht werden, dass die Vorschubspindel als Kugelumlaufspindel ausgebildet ist und der Schlitten auf zwei Führungsleisten gelagert ist, die am Hohlkörper zu beiden Seiten des Längsschlitzes befestigt sind und über dessen Oberseite hinausragen. Durch die Verwendung einer technisch aufwändigen Kugelumlaufspindel und zweier zusätzlich anzubringender Führungsleisten ist auch diese Verstelleinheit verhältnismäßig aufwändig.

Der Erfindung liegt daher die Aufgabe zugrunde, eine Verstelleinheit der gattungsgemäßen Art so zu gestalten, dass sie durch Reduzierung der Teilevielfalt einfacher herstellbar und vielseitiger verwendbar ist. Die Aufgabe wird durch den Patentanspruch 1 gelöst.

Durch die Maßnahme, einen innerhalb des als stabförmiger Hohlkörper ausgebildeten Grundteils befindlichen Teil des Schlittens zusammen mit der sie aufnehmenden Längsnut als Gleitlager auszubilden, übernimmt dieser Schlittenteil, nämlich der den Schlitten mit der Spindel funktionsmäßig verbindende Steg, die Aufgabe der drehsicheren Halterung des Schlittens, so dass sich zusätzliche, an der Außenseite des Grundkörpers angreifende Drehsicherungselemente erübrigen. Somit ist die Verstelleinheit aus einem Minimum von Bauelementen aufgebaut. Da ferner die Querschnittsform und Größe des stabförmigen Hohlkörpers keinen Einfluss auf die Gestaltung des Stegs und damit allgemein auf die Ausgestaltung der drehsicheren Lagerung des Schlittens hat, kann gemäß der Weiterbildung nach Anspruch 2 der Hohlkörper einen zylinder- oder rechteckförmigen Querschnitt aufweisen, wobei am Hohlkörper im Bereich der Längsnut an seinem Umfang Gleitflächen für den Schlitten ausgebildet sind. Auf diese Weise lässt sich die erfindungsgemäße Verstelleinheit universell bei hinsichtlich Querschnittsform und Größe unterschiedlichen Hohlkörpern verwenden; einzige Voraussetzung ist, dass die den Steg aufnehmende Längsnut stets einheitlich ausgebildet ist.

Durch die Weiterbildung nach Anspruch 3, wonach der Hohlkörper ein Profilstab mit mindestens einer hinterschnittenen Längsnut ist, deren den Durchgangsbereich begrenzende Stirnflächen als Gleitführungen für den Steg des Schlittens ausgebildet sind und die Gewindemutter in einem Ansatz ausgebildet ist, der mit dem Steg verbunden und im hinterschnittenen Teil der Längsnut aufgenommen ist, ist die Gleitlagerung des Schlittens formschlüssig ausgebildet. Dies ermöglicht es, die Verstelleinheit nicht nur in horizontaler Lage anzuordnen, wobei der Schlitten auf dem Hohlkörper aufliegt, sondern sie auch in vertikaler Ausrichtung oder in hängender Lage zu verwenden. Gemäß der bevorzugten Ausführungsform nach Anspruch 4, bilden hierbei die an den Durchgangsbereich der Längsnut anschließenden Außenflächen und die an den Durchgangsbereich der Längsnut anschließenden Innenflächen des Profilstabes Gleitflächen für den Schlitten.

Bei einer anderen Weiterbildung gemäß Anspruch 5 kann der Profilstab zwei oder mehrere in seitlichem Abstand und parallel zueinander angeordnete hinterschnittene Längsnuten aufweisen, deren jeweilige seitliche Begrenzungsflächen als Gleitführung für den Steg des jeweiligen Schlittens ausgebildet sind. Aufgrund der raumsparenden Bauweise der Verstelleinheit kann hierbei der gegenseitige Abstand der Längsnuten verhältnismäßig eng gewählt werden. In gleicher Weise kann gemäß Anspruch 6 der Profilstab mehrere, jeweils im Bereich einer seiner Außenflächen angeordnete hinterschnittene Längsnuten aufweisen, deren jeweilige seitliche Begrenzungsflächen als Gleitführung für den Steg des jeweiligen Schlittens ausgebildet sind. Dies ermöglicht es zum Beispiel an einem Profilstab an einander gegenüberliegenden Seiten eine oder mehrere Längsnuten vorzusehen.

Die raumsparende Bauweise der Verstelleinheit ermöglicht es ferner, dass auf besonders einfache Art gemäß Anspruch 7 mehrere, jeweils wenigstens einen Schlitten tragende Profilstäbe in horizontaler und/oder vertikaler Ebene in unterschiedlicher Erstreckungsrichtung angeordnet sind. Auf diese Weise lassen sich z. B. mit geringem Aufwand dreiachsige Verstellsysteme aufbauen.

In einer anderen Weiterbildung gemäß Anspruch 8 ist der Längsnut mehr als ein Schlitten zugeordnet, wobei die Ansätze der Schlitten mit einer gemeinsamen Spindel verbunden sind. Hierbei werden die Schlitten beim Drehen der Spindel unter Beibehaltung ihres gegenseitigen Abstandes gemeinsam in dieselbe Richtung verschoben. Wenn gemäß Anspruch 9 die gemeinsame Spindel zwei im Abstand zueinander angeordnete Bereiche mit unterschiedlichen Steigungswinkel aufweist und jedem der Bereiche eine Gewindemutter mit entsprechend gerichtetem Steigungswinkel zugeordnet ist, werden beim Drehen der Spindel die Schlitten gegenläufig bewegt und zwar je nach Drehrichtung der Spindel aufeinanderzu oder voneinanderweg.

Bei der Weiterbildung nach Anspruch 10 sind der Längsnut zwei Schlitten zugeordnet und die Ansätze der Schlitten mit je einer eigenen Spindel verbunden, wobei diese unabhängig voneinander drehbar sind. In diesem Fall können die Schlitten wahlweise in gleicher oder entgegengesetzter Richtung verschoben werden.

Im folgenden sind mehrere Ausführungsbeispiele der Erfindung anhand der Zeichnung mit den Fig. 1 bis 9 näher erläutert.
Es zeigt:
- Fig. 1: eine schaubildliche Darstellung einer Verstelleinheit;
- Fig. 2: eine Schnittdarstellung des Profilstabes einer Verstelleinheit;
- Fig. 3: eine Schnittdarstellung eines Schlittens;
- Fig. 4: eine Schnittdarstellung eines in einen Profilstab eingesetzten Schlittens;
- Fig. 5: eine schaubildliche Darstellung eines Profilstabes einer Verstelleinheit mit mehreren parallel laufenden Längsnuten;
- Fig. 6: eine Anordnung einer Verstelleinheit an einem Profilstab einer Profilkonstruktion;
- Fig. 7: eine schaubildliche Darstellung eines dreiachsigen Verstellsystems;
- Fig. 8: eine Schnittdarstellung einer vereinfachten Ausführungsform eines Schlittens und des entsprechend ausgebildeten Profilstabes;
- Fig. 9: eine schaubildliche Darstellung eines weiteren Ausführungsbeispiels einer Verstelleinheit.

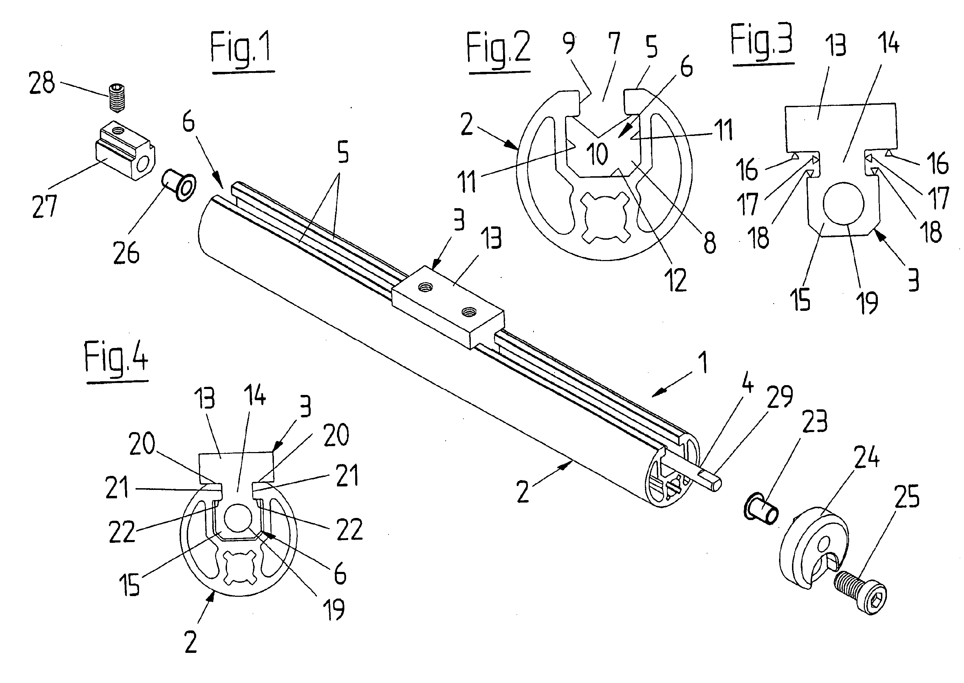

Die in Fig. 1 dargestellte Verstelleinheit 1 besteht im wesentlichen aus einem Profilstab 2, einem in ihm gelagerten Schlitten 3 und einer mit Gewinde versehenen Spindel 4, die mit dem Schlitten 3 in Antriebsverbindung steht.

Der Profilstab 2 hat gemäß Fig. 3 einen runden Querschnitt und enthält im Bereich einer durch eine Abflachung gebildeten ebenen Auflagefläche 5 eine Längsnut 6, die aus einem Durchgangsbereich 7 und einem Hinterschneidungsbereich 8 besteht. Die beiden Längsnutbereiche werden nachfolgend der Einfachheit halber als Durchgang 7 und Hinterschneidung 8 bezeichnet. Die die Breite des Durchgangs 7 bestimmenden Stirnflächen des Durchgangs 7 sind mit 9 bezeichnet. Die Hinterschneidung 8 weist zwei sich an die Stirnflächen 9 anschließende parallel zur Auflagefläche 5 verlaufende Innenquerflächen 10, zwei parallel zu den Stirnflächen 9 verlaufende Seitenflächen 11 und eine parallel zur Auflagefläche 5 verlaufende Bodenfläche 12 auf.

Der Schlitten 3 besteht aus einer Auflageplatte 13, einem Steg 14 und einem Ansatz 15. Von den verschiedenen Flächen des Schlittens 3 sind die an der Unterseite der Auflageplatte 13 liegenden, an den Steg 14 angrenzenden Querflächen mit 16, die Seitenflächen des Steges 14 mit 17 und die angrenzenden Querflächen des Ansatzes 15 mit 18 bezeichnet. Im Ansatz 15 ist ein Innengewinde 19 enthalten, in das die Spindel 4 einschraubbar ist.

Bei in die Längsnut 6 eingesetztem Schlitten 3 stützt sich dieser über die Querflächen 16 der Auflageplatte 13 auf der Auflagefläche 5 des Profilstabes 2 ab. Ferner liegen die Seitenflächen 17 des Steges 14 an den Stirnflächen 9 des Durchgangs 7 und die Querflächen 18 des Ansatzes 15 an den Innenquerflächen 10 der Hinterschneidung 8 an. Auf diese Weise wirken diese Flächen als Gleitflächen für eine Gleitführung 20 zwischen der Auflageplatte 13 des Schlittens 3 und dem Profilstab 2, für eine Gleitführung 21 zwischen dem Steg 14 und dem Durchgang 7 sowie für eine weitere Gleitführung 22 zwischen dem Ansatz 15 und der Hinterschneidung 8.

Das eine Ende der Spindel 4 ist über eine Buchse 23 in einem Lagerschild 24 drehbar gelagert und in bekannter Weise axial festgelegt. Das Lagerschild 24 ist mit Hilfe einer Schraube 25 an dem Profilstab 2 befestigt. Das andere Ende der Spindel 4 ist über eine Buchse 26 in einem Lagerstück 27 drehbar gelagert, das in der Längsnut 6 aufgenommen und durch eine Schraube 28 im Profilstab 2 festgeklemmt ist. Dieses zweite Lager ist als Loslager ausgebildet. Im montierten Zustand ragt die Spindel 4 mit dem abgeflachten Endstück 29 aus dem Lagerschild 24 heraus. Zur Betätigung der Spindel 4 kann auf ihrem abgeflachten Endstück 29 in bekannter und deshalb nicht dargestellter Weise eine Kurbel, ein Handrad oder ein Stellmotor befestigt werden.

Durch Drehen der Spindel 4 wird je nach Drehrichtung der Schlitten 3 in die eine oder entgegengesetzte andere Richtung verschoben. Da die Gleitführungen 20, 21 und 22 gemeinsam eine formschlüssige Gleitlagerung bilden und somit der Schlitten 3 auch in vertikaler oder hängender Lage gegen Herausfallen aus der ihn aufnehmenden Längsnut 6 gesichert ist, kann daher die Verstelleinheit 1 ohne Einschränkung in beliebiger Einbaulage verwendet werden.

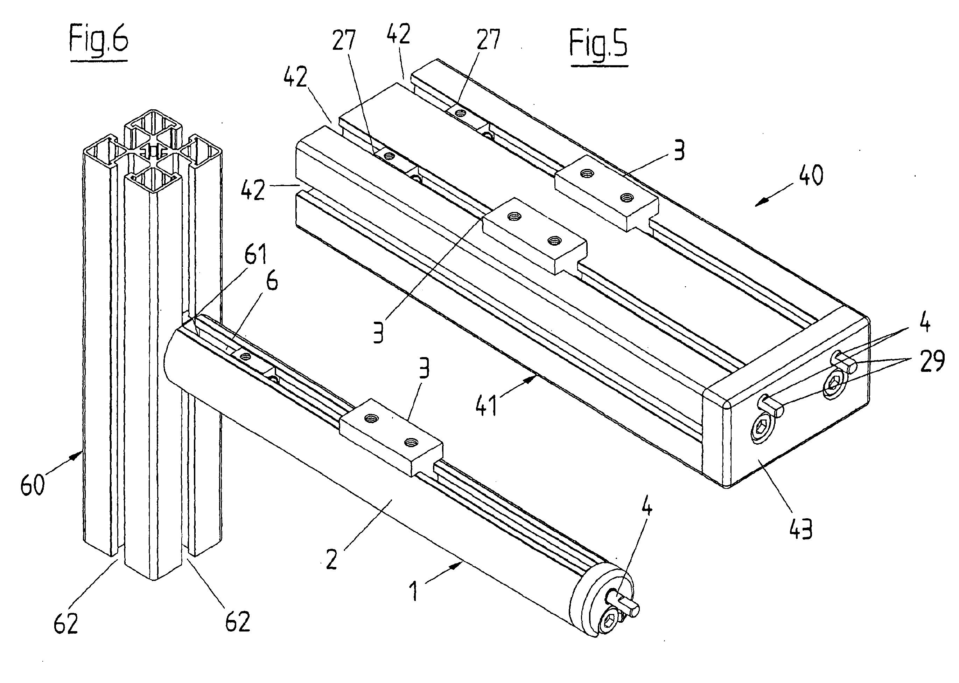

Die in Fig. 5 dargestellte Verstelleinheit 40 weist einen Profilstab 41 mit rechteckigem Querschnitt auf, der an den breiten Seiten zwei Längsnuten 42 und an den schmalen Seiten je eine Längsnut 42 aufweist. Diese insgesamt sechs Längsnuten 42 entsprechen der in den Figuren 1 bis 4 des ersten Ausführungsbeispiels gezeigten Längsnut 6. In die beiden oben liegenden Längsnuten 42 ist je ein Schlitten eingesetzt, der dem Schlitten 3 des ersten Ausführungsbeispiels entspricht und deshalb ebenfalls mit 3 bezeichnet ist. Die Schlitten 3 sind in vergleichbarer Weise wie beim ersten Ausführungsbeispiel mit je einer Spindel 4 verbunden, die einerends in einem Lagerschild 43 und anderenends in einem in der jeweiligen Längsnut 42 befindlichen Lagerstück 27 aufgenommen sind. Die Spindeln 4 ragen mit einem abgeflachten Endstück 29 aus dem Lagerschild 45 heraus. Zur Betätigung der Spindeln 4 kann wie beim ersten Ausführungsbeispiel auf ihren abgeflachten Endstücken 29 eine Kurbel, ein Handrad oder ein Stellmotor befestigt werden.

In Fig. 5 ist nur in den beiden oben liegenden Längsnuten 42 je ein Schlitten 3 eingesetzt. Bei Bedarf könnte aber auch in jeder anderen der sechs Längsnuten 42 je ein Schlitten eingesetzt und mit einer eigenen Spindel verbunden werden. Sofern in einem solchen Fall die Spindeln so dicht nebeneinander liegen, dass sich deren Betätigungselemente, d. h. die Kurbeln, Handräder oder Stellmotoren gegenseitig behindern würden, könnten die Spindeln abwechselnd gegensinnig eingebaut werden, so dass deren Betätigungselemente abwechselnd auf der einen und der anderen Stirnseite des Profilstabes 41 angeordnet wären. Eine andere Möglichkeit, mehrere Spindeln dicht nebeneinander anzuordnen, besteht darin, diese über bekannte Winkelgetriebe mit ihren Betätigungselementen zu verbinden. In diesem Fall können die Spindeln trotz ihres geringen gegenseitigen Abstandes gleichsinnig eingebaut und die Betätigungselemente auf der gleichen Stirnseite des Profilstabes 41 angeordnet werden.

Bei beiden Ausführungsbeispielen besteht ferner die Möglichkeit, in der Längsnut 6 oder einer bzw. mehreren der Längsnuten 42 jeweils mehr als einen Schlitten 3 mit beliebigem festem gegenseitigem Abstand anzuordnen und den jeweils in einer Längsnut aufgenommenen Schlitten 3 je eine gemeinsame Spindel 4 zuzuordnen. In diesem Fall werden beim Drehen einer Spindel 4 die mit ihr verbundenen Schlitten 3 gemeinsam unter Beibehaltung ihres festgelegten Abstandes verschoben.

Bei beiden Ausführungsbeispielen besteht darüber hinaus die Möglichkeit, in der Längsnut 6 oder einer bzw. mehreren der Längsnuten 42 jeweils zwei Schlitten 3 anzuordnen und jedem der beiden in jeweils einer Längsnut 6 bzw. 42 aufgenommenen Schlitten 3 je eine eigene Spindel 4 und dieser ein entsprechendes Betätigungselement zuzuordnen. Auf diese Weise können jeweils die beiden in einer gemeinsamen Längsnut 6 bzw. 42 aufgenommenen Schlitten 3 völlig unabhängig voneinander bewegt werden, z. B. einzeln oder gemeinsam in gleicher oder entgegengesetzter Richtung und dabei mit unterschiedlicher Geschwindigkeit und unterschiedlicher Wegstrecke.

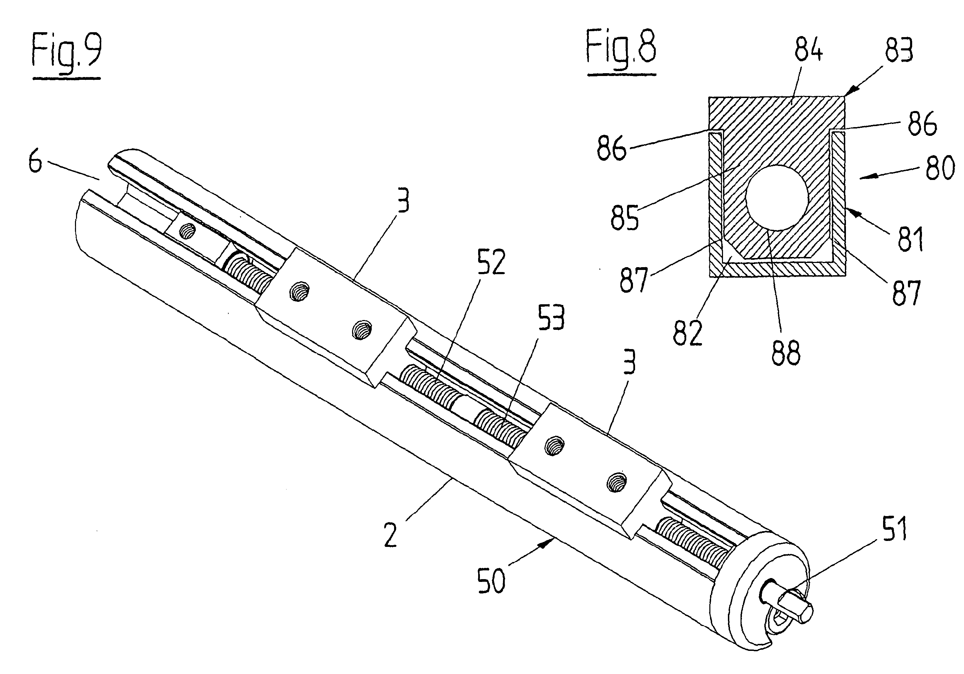

In Fig. 9 ist als weitere Ausführungsform eine Verstelleinheit 50 dargestellt, die einen Profilstab enthält, welcher dem Profilstab 2 des ersten Ausführungsbeispieles entspricht und deshalb ebenfalls mit 2 bezeichnet ist. Im Profilstab 2 ist eine Spindel 51 angeordnet, die zwei im Abstand zueinander angeordnete Bereiche mit unterschiedlichen Steigungswinkeln, d. h. zwei gegenläufige Gewindeabschnitte 52 und 53 aufweist. Diesen Gewindeabschnitten 52, 53 ist je ein Schlitten 3 zugeordnet, dessen Innengewinde jeweils an den Steigungswinkel der entsprechenden Gewindeabschnitte 52 und 53 angepasst ist. Beim Drehen der Spindel 51 werden die beiden Schlitten 3 jeweils gegenläufig bewegt und zwar je nach Drehrichtung der Spindel 51 aufeinanderzu oder voneinanderweg.

In Fig.6 ist beispielhaft dargestellt, wie die Verstelleinheit 1 freikragend an einem Profilstab 60 angeordnet ist, der für den Aufbau beliebig ausgebildeter Profilkonstruktionen dient. Die lösbare Befestigung der Verstelleinheit 1 erfolgt mit Hilfe eines aus der DE 41 27 284 C1 bekannten L-förmigen Haltestücks 61, dessen einer Schenkel in eine der Längsnuten 62 des Profilstabes 60 und dessen anderer Schenkel in die Längsnut 6 des Profilstabes 2 eingesetzt und festgeschraubt ist.

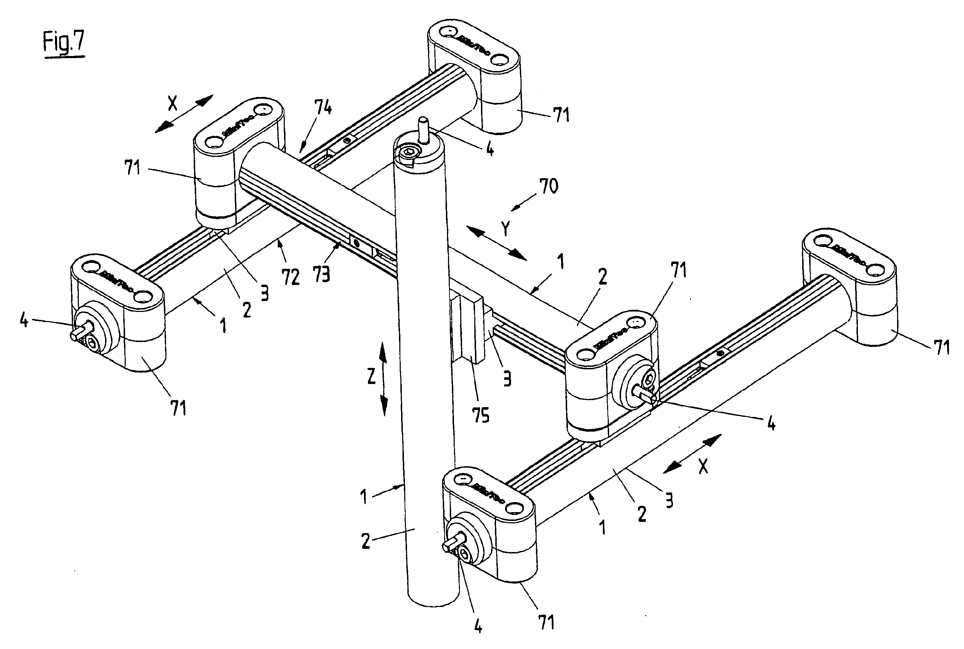

Fig. 7 zeigt die Konstruktion eines aus mehreren Verstelleinheiten 1 aufgebauten dreiachsigen Verstellsystems 70. Zu diesem Zweck sind in einer ersten Ebene in Längsrichtung X zwei Verstelleinheiten 1 mit gegenseitigem Abstand angeordnet, wobei je zwei auf einer nicht dargestellten Unterlage befestigte Träger 71 den jeweils zugeordneten Profilstab 2 festhalten. Auf den Schlitten 3 dieser beiden Verstelleinheiten 1 ist je ein weiterer Träger 71 befestigt. In diesen ist in einer zweiten parallelen Ebene der Profilstab 2 einer dritten Verstelleinheit 1 fest angeordnet, die sich in Querrichtung Y erstreckt. Die beiden in Längsrichtung X verlaufenden Verstelleinheiten 1 bilden mit ihren mit Hilfe der Spindeln 4 verschiebbaren Schlitten 3 gemeinsam einen Längsschlitten 72. Die auf ihm angeordnete, in Querrichtung Y verlaufende Verstelleinheit 1 bildet mit ihrem mit Hilfe der Spindel 4 verschiebbaren Schlitten 3 einen Querschlitten 73. Der Längsschlitten 72 und der Querschlitten 73 bilden gemeinsam einen Kreuzschlitten 74.

An einer am Schlitten 3 der Verstelleinheit 1 des Querschlittens 73 befestigten Trägerplatte 75 ist der hier verdeckt liegende und deshalb nicht dargestellte Schlitten 3 einer sich in Vertikalrichtung Z erstreckenden weiteren Verstelleinheit 1 befestigt. Beim Drehen der Spindel 4 dieser Verstelleinheit 1 wird der gesamte Profilstab 2 in Vertikalrichtung Z verschoben. Sofern an Stelle des Schlittens 3 das Profilrohr 2 an der Trägerplatte 75 befestigt ist, bleibt beim Drehen der Spindel 4 der Profilstab 2 in Vertikalrichtung Z stehen und es wird stattdessen der Schlitten 3 vertikal verschoben.

In Fig. 8 ist eine vereinfachte Ausführungsform einer Verstelleinheit 80 dargestellt. Bei ihr hat der Profilstab 81 einen U-förmigen Querschnitt, so dass die in ihm ausgebildete Längsnut 82 zwei vertikal und parallel verlaufende Seitenflächen aufweist. Die nach oben weisenden quer verlaufenden schmalen Flächen des Profilstabes 81 bilden eine Auflagefläche.

Der zugeordnete Schlitten 83 besteht aus einer Auflageplatte 84 und einem schmäleren Ansatz 85. Bei in die Längsnut 82 eingesetztem Schlitten 83 stützt sich dieser über die nach unten weisenden schmalen Querflächen der Auflageplatte 84 auf den nach oben weisenden quer verlaufenden schmalen Flächen des Profilstabes 81 ab, wobei diese miteinander in Berührung stehenden Flächen je eine horizontale Gleitführung 86 bilden. Ferner stehen auch die vertikal verlaufenden Seitenflächen des Ansatzes 85 mit den hierzu parallel verlaufenden Flächen der Längsnut 82 in Kontakt, wodurch sie zwei vertikale Gleitführungen 87 bilden und dadurch eine verdrehsichere Lagerung des Schlittens 83 bewirken.

Im Ansatz 85 ist ein Innengewinde 88 für eine nicht dargestellte Spindel ausgebildet. Die Spindel kann wie die Spindel des ersten Ausführungsbeispieles ausgebildet und in ähnlicher Weise im Profilstab 81 gelagert sein.

Da die Längsnut 82 keine Hinterschneidung aufweist und der Ansatz des Schlitten 83 dementsprechend glattwandig ausgebildet ist, kann eine solcherart ausgebildete Verstelleinheit nur in einer im wesentlichen horizontalen Einbaulage verwendet werden.

## Patentansprüche

1. Verstelleinheit (1; 40; 50; 80) mit in einem Grundteil (2; 41; 81) gelagerter Spindel (4; 51) und einer mit dieser zusammenwirkenden Gewindemutter (15; 85), wobei ein Schlitten (3; 83) entlang von am Grundteil (2; 41; 81) ausgebildeten Gleitführungen (21; 87) relativ zum Grundteil (2; 41; 81) bewegbar und das Grundteil (2; 41; 81) als stabförmiger Hohlkörper ausgebildet ist und eine sich über den Verstellweg des Schlittens (3; 83) erstreckende Längsnut (6; 42; 82) aufweist, **dadurch gekennzeichnet, dass** die seitlichen Begrenzungsflächen (9) der Längsnut (6; 42; 82) als Gleitführungen (21; 87) für einen den Schlitten (3; 83) und die Gewindemutter (15; 85) verbindenden Steg (14; 85) ausgebildet sind.

2. Verstelleinheit nach Anspruch 1, **dadurch gekennzeichnet, dass** der Hohlkörper (2; 41; 81) einen zylinder- oder rechteckförmigen Querschnitt aufweist und im Bereich der Längsnut (6; 42; 82) an seinem Umfang Gleitflächen (9) für den Schlitten (3; 83) ausgebildet sind.

3. Verstelleinheit nach Anspruch 1, **dadurch gekennzeichnet, dass** der Hohlkörper ein Profilstab (2; 41) mit mindestens einer hinterschnittenen Längsnut (6; 42) ist, deren den Durchgangsbereich (7) begrenzende Stirnflächen (9) als Gleitführungen (21) für den Steg (14) des Schlittens (3) ausgebildet sind und die Gewindemutter in einem Ansatz (15) ausgebildet ist, der mit dem Steg (14) verbunden und im hinterschnittenen Teil (8) der Längsnut (6; 42) aufgenommen ist.

4. Verstelleinheit nach Anspruch 3, **dadurch gekennzeichnet, dass** die an den Durchgangsbereich (7) der Längsnut (6; 42) anschließenden Außenflächen (5) und die an den Durchgangsbereich (7) der Längsnut (6; 42) anschließenden Innenflächen (10) des Profilstabes (2; 41) Gleitflächen für den Schlitten (3) bilden.

5. Verstelleinheit nach Anspruch 3, **dadurch gekennzeichnet, dass** der Profilstab (41) zwei oder mehrere in gegenseitigem Abstand und parallel zueinander angeordnete hinterschnittene Längsnuten (42) aufweist, deren jeweilige seitliche Begrenzungsflächen als Gleitflächen für den Steg (14) des jeweiligen Schlittens (3) ausgebildet sind.

6. Verstelleinheit nach Anspruch 3, **dadurch gekennzeichnet, dass** der Profilstab (41) mehrere, jeweils im Bereich einer seiner Außenflächen angeordnete hinterschnittene Längsnuten (42) aufweist, deren jeweilige seitliche Begrenzungsflächen als Gleitflächen für den Steg (14) des jeweiligen Schlittens (3) ausgebildet sind.

7. Verstelleinheit nach Anspruch 4, **dadurch gekennzeichnet, dass** mehrere, jeweils wenigstens einen Schlitten (3) tragende Profilstäbe (2;) in horizontaler und/oder vertikaler Ebene in unterschiedlicher Erstreckungsrichtung angeordnet sind.

8. Verstelleinheit nach Anspruch 4, **dadurch gekennzeichnet, dass** der Längsnut (6; 42) mehr als ein Schlitten (3) zugeordnet ist und die Ansätze (15) der Schlitten (3) mit einer gemeinsamen Spindel (4) verbunden sind.

9. Verstelleinheit nach Anspruch 8, **dadurch gekennzeichnet, dass** die Spindel (51) zwei im Abstand zueinander angeordnete Bereiche (52, 53) mit unterschiedlichen Steigungswinkeln aufweist und jedem der Bereiche (52, 53) eine Gewindemutter mit entsprechend gerichtetem Steigungswinkel zugeordnet ist.

10. Verstelleinheit nach Anspruch 4, **dadurch gekennzeichnet, dass** der Längsnut (6; 42) zwei Schlitten (3) zugeordnet und die Ansätze (15) der Schlitten (3) mit je einer eigenen Spindel (4) verbunden sind, wobei diese unabhängig voneinander drehbar sind.

## Claims

1. Adjustment unit (1; 40; 50; 80) having a spindle (4; 51) mounted in a basic part (2; 41; 81) and a threaded nut (15; 85) interacting with said spindle (4; 51), wherein a carriage (3; 83) is movable in relation to the basic part (2; 41; 81) along sliding guides (21; 87) formed on the basic part (2; 41; 81) and the basic part (2; 41; 81) is in the form of a rod-like hollow body and has a longitudinal groove (6; 42; 82) extending along the adjustment path of the carnage (3; 83), **characterized in that** the lateral boundary surfaces (9) of the longitudinal groove (6; 42; 82) are in the form of sliding guides (21; 87) for a rib (14; 85) connecting the carriage (3; 83) and the threaded nut (15; 85).

2. Adjustment unit according to Claim 1, **characterized in that** the hollow body (2; 41; 81) has a cylindrical or rectangular cross section and sliding surfaces (9) for the carriage (3; 83) are formed on its periphery in the region of the longitudinal groove (6; 42; 82).

3. Adjustment unit according to Claim 1, **characterized in that** the hollow body is a profiled bar (2; 41) having at least one undercut longitudinal groove (6; 42), the end faces (9) of which adjoining the through-passage region (7) are in the form of sliding guides (21) for the rib (14) of the carriage (3) and the threaded nut is formed in an attachment (15) which is connected to the rib (14) and is received in the undercut part (8) of the longitudinal groove (6; 42).

4. Adjustment unit according to Claim 3, **characterized in that** the external surfaces (5) adjoining the through-passage region (7) of the longitudinal groove (6; 42) and the inner surfaces (10), adjoining the through-passage region (7) of the longitudinal groove (6; 42), of the profiled bar (2; 41) form sliding surfaces for the carriage (3).

5. Adjustment unit according to Claim 3, **characterized in that** the profiled bar (41) has two or more undercut longitudinal grooves (42) which are arranged at a mutual spacing and parallel to one another and the respective lateral boundary surfaces of which are in the form of sliding surfaces for the rib (14) of the respective carriage (3),

6. Adjustment unit according to Claim 3, **characterized in that** the profiled bar (41) has a plurality of undercut longitudinal grooves (42) which are arranged in each case in the region of one of the outer surfaces of said profiled bar (41) and the respective lateral boundary surfaces of which are in the form of sliding surfaces for the rib (14) of the respective carriage (3).

7. Adjustment unit according to Claim 4, **characterized in that** a plurality of profiled bars (2) which carry in each case at least one carriage (3) are arranged in a horizontal and/or vertical plane in different directions of extent.

8. Adjustment unit according to Claim 4, **characterized in that** the longitudinal groove (6, 42) is assigned more than one carriage (3) and the attachments (15) on the carriage (3) are connected to a common spindle (4).

9. Adjustment unit according to Claim 8, **characterized in that** the spindle (51) has two regions (52, 53) which are arranged in a manner spaced apart from one another and have different helix angles, and each of the regions (52, 53) is assigned a threaded nut having a correspondingly directed helix angle.

10. Adjustment unit according to Claim 4, **characterized in that** the longitudinal groove (6; 42) is assigned two carriages (3) and the attachments (15) on the carriages (3) are connected in each case to a separate spindle (4), wherein the latter are rotatable independently of one another.

## Revendications

1. Unité de réglage (1 ; 40 ; 50 ; 80) comprenant une broche (4 ; 51) montée dans une partie de base (2 ; 41 ; 81) et un écrou fileté (15 ; 85) coopérant avec celle-ci, un chariot (3 ; 83) étant réalisé de manière déplaçable par rapport à la partie de base (2 ; 41 ; 81) le long de glissières (21 ; 87) réalisées sur la partie de base (2 ; 41 ; 81 et la partie de base (2 ; 41 ; 81) étant réalisée sous forme de corps creux en forme de barre et présentant une rainure longitudinale (6 ; 42 ; 82) s'étendant sur toute la course de réglage du chariot (3 ; 83), **caractérisée en ce que** des surfaces de limitation latérales (9) de la rainure longitudinale (6 ; 42, 82) sont réalisées sous forme de glissières (21 ; 87) pour une nervure (14 ; 85) reliant le chariot (3 ; 83) et l'écrou fileté (15 ; 85).

2. Unité de réglage selon la revendication 1, **caractérisée en ce que** le corps creux (2 ; 41 ; 81) présente une section transversale cylindrique ou rectangulaire et des surfaces de glissement (9) pour le chariot (3 ; 83) sont réalisées dans la région de la rainure longitudinale (6 ; 42 ; 82) sur sa périphérie.

3. Unité de réglage selon la revendication 1, **caractérisée en ce que** le corps creux est une barre profilée (2 ; 41) ayant au moins une rainure longitudinale (6 ; 42) en contre-dépouille, dont les faces frontales (9) limitant la région de passage (7) sont réalisées sous forme de glissières (21) pour la nervure (14) du chariot (3) et l'écrou fileté est réalisé dans une pièce (15) qui est connectée à la nervure (14) et qui est reçue dans la partie en contre-dépouille (8) de la rainure longitudinale (6 ; 42).

4. Unité de réglage selon la revendication 3, **caractérisée en ce que** les surfaces extérieures (5) se raccordant à la région de passage (7) de la rainure longitudinale (6 ; 42) et les surfaces intérieures (14) se raccordant à la région de passage (7) de la rainure longitudinale (6 ; 42) de la barre profilée (2 ; 41) forment des surfaces de glissement pour le chariot (3).

5. Unité de réglage selon la revendication 3, **caractérisée en ce que** la barre profilée (41) présente deux ou plus de deux rainures longitudinales (42) en contre-dépouille disposées à distance mutuelle et parallèlement les unes aux autres, dont les surfaces de limitation latérales respectives sont réalisées sous forme de surfaces de glissement pour la nervure (14) du chariot (3) respectif.

6. Unité de réglage selon la revendication 3, **caractérisée en ce que** la barre profilée (41) présente plusieurs rainures longitudinales (42) en contre-dépouille disposées à chaque fois dans la région de l'une de ses surfaces extérieures, dont les surfaces de limitation latérales respectives sont réalisées sous forme de surfaces de glissement pour la nervure (14) du chariot (3) respectif.

7. Unité de réglage selon la revendication 4, **caractérisée en ce que** plusieurs barres profilées (2) portant à chaque fois au moins un chariot (3) sont disposées dans un plan horizontal et/ou vertical dans différentes directions d'étendue.

8. Unité de réglage selon la revendication 4, **caractérisée en ce que** la rainure longitudinale (6 ; 42) est associée à plus d'un chariot (3) et les pièces (15) des chariots (3) sont connectées à une broche commune (4).

9. Unité de réglage selon la revendication 8, **caractérisée en ce que** la broche (51) présente deux régions (52, 53) disposées à distance l'une de l'autre avec des angles de pas différents, et un écrou fileté d'angle de pas orienté de manière correspondante est à chaque fois associé à chacune des régions (52, 53).

10. Unité de réglage selon la revendication 4, **caractérisée en ce que** la rainure longitudinale (6 ; 42) est associée à deux chariots (3) et les pièces (15) des chariots (3) sont connectées à une broche propre respective (4), ces broches pouvant tourner indépendamment l'une de l'autre.
